# EUROPÄISCHE PATENTANMELDUNG

(11) **EP 3 248 826 A1**
(43) Veröffentlichungstag der Anmeldung: **29.11.2017**
(21) Anmeldenummer: 16171714.5
(22) Anmeldetag: 27.05.2016
(51) Int. Cl.: B60L 11/18

(54) **SYSTEM ZUR VERSORGUNG EINER VERBRAUCHEREINHEIT MIT NETZ-SPANNUNG**

(71) Anmelder: E.ON Czech Holding AG, 80634 München (DE)
(72) Erfinder: RIEK, Michael, 80634 München (DE)
(74) Vertreter: Glawe, Delfs, Moll

(57) **Zusammenfassung**

Gegenstand der Erfindung ist ein System zur Versorgung einer Verbrauchereinheit (9) mit Netzspannung, das aufweist:
a) eine Fotovoltaik-Anlage (13),
b) einen Fotovoltaik-Wechselrichter (14),
c) einen Netzanschluss (15),

Erfindungsgemäß ist vorgesehen, dass das System weiter aufweist:
d) einen Batteriewechselrichter (16),
e) ein mobiles, anschließbares Batteriemodul mit einem Gehäuse (10) und einer darin angeordneten wiederaufladbaren Batterie (2), wobei das Batteriemodul aufweist:
(i) Zustandssensoren (3), die zur Erfassung wenigstens von Temperatur und Ladezustand der Batterie (2) ausgebildet sind,
(ii) ein Batteriemanagementsystem (4), das den Betrieb der wiederaufladbaren Batterie (2) innerhalb eines vorgegebenen Betriebsfensters gewährleistet,
(iii) ein Energiemanagementsystem (5), das zur Steuerung von Ladung und/oder Entladung der Batterie (2) in Abhängigkeit von vorgebbaren Randbedingungen ausgebildet ist,
(iv) eine Kommunikationsschnittstelle (6), über die das Energiemanagementsystem (5) Steuerungsdaten, Regelungsdaten und/oder Randbedingungen senden und/oder empfangen kann,
(v) einen DC-Anschluss (8) zum externen Laden und/oder Entladen.

## Beschreibung

Die Erfindung betrifft ein System zur Versorgung einer Verbrauchereinheit mit Netzspannung, das aufweist:
a) eine Fotovoltaik-Anlage,
b) einen Fotovoltaik-Wechselrichter,
c) einen Netzanschluss.

Solche Systeme sind aus offenkundiger Vorbenutzung bekannt und werden beispielsweise zur Stromversorgung eines Haushalts verwendet. Der Haushalt kann dabei vollständig durch die Fotovoltaik-Anlage, teilweise durch die Fotovoltaik-Anlage und teilweise über den Netzanschluss (aus einem öffentlichen Netz), oder auch vollständig über den Netzanschluss mit Strom versorgt werden. Sofern der von der Fotovoltaik-Anlage erzeugte Strom den Bedarf des Haushalts übersteigt kann der überschüssige Strom auch über den Netzanschluss in das öffentliche Netz eingespeist werden.

Nachteilig an den bekannten Systemen ist, dass sie häufig unflexibel und wenig benutzerfreundlich sind, und dass der von dem System erzeugte Fotovoltaikstrom nicht in ökonomisch optimaler Weise eingesetzt wird.

Es ist die Aufgabe der vorliegenden Erfindung diese Nachteile zu vermeiden. Die Aufgabe wird bei einem System der eingangs genannten Art dadurch gelöst, dass das System weiter aufweist:
d) einen Batteriewechselrichter,
e) ein mobiles, anschließbares Batteriemodul mit einem Gehäuse und einer darin angeordneten wiederaufladbaren Batterie, wobei das Batteriemodul aufweist:
   (i) Zustandssensoren, die zur Erfassung wenigstens von Temperatur und Ladezustand der Batterie ausgebildet sind,
   (ii) ein Batteriemanagementsystem, das den Betrieb der wiederaufladbaren Batterie innerhalb eines vorgegebenen Betriebsfensters gewährleistet,
   (iii) ein Energiemanagementsystem, das zur Steuerung von Ladung und/oder Entladung der Batterie in Abhängigkeit von vorgebbaren Randbedingungen ausgebildet ist,
   (iv) eine Kommunikationsschnittstelle, über die das Energiemanagementsystem Steuerungsdaten, Regelungsdaten und/oder Randbedingungen senden und/oder empfangen kann,
   (v) einen DC-Anschluss zum externen Laden und/oder Entladen.

Zunächst werden einige im Rahmen der Erfindung verwendete Begriffe erläutert.

Das erfindungsgemäße System dient der Versorgung einer Verbrauchereinheit mit Netzspannung. Der Begriff Verbrauchereinheit bezeichnet eine Einheit, die regelmäßig elektrische Energie benötigt wie beispielsweise ein Haushalt, eine Hausgemeinschaft, ein Gewerbebetrieb oder dergleichen. Der Begriff Netzspannung umfasst alle üblicherweise zur Versorgung verwendeten Nieder- und Mittelspannungen, typischerweise Wechselspannung (AC), beispielsweise Einphasen- oder Dreiphasen-Wechselspannung im Bereich 110 bis 400 V, 50 oder 60 Hz.

Das System weist eine Fotovoltaik-Anlage auf, die zur (teilweisen) Versorgung der Verbrauchereinheit mit elektrischer Energie dient und gegebenenfalls Überschüsse über den Netzanschluss in das öffentliche Netz einspeisen kann.

Der Fotovoltaik-Wechselrichter dient der Umsetzung der von der Fotovoltaik-Anlage erzeugten Gleichspannung in geeignete Wechselspannung. Der Netzanschluss ist ein üblicher Anschluss an das öffentliche Netz versehen mit einem Energiezähler, bevorzugt ist er dazu ausgebildet, Überschussenergie der Fotovoltaik-Anlage einzuspeisen.

Das System weist ferner als stationären Bestandteil einen Batteriewechselrichter auf, an den ein Batteriemodul angeschlossen werden kann. Es handelt sich um eine Einrichtung, die Gleichspannung des angeschlossenen Batteriemoduls in Netzspannung der geeigneten Frequenz umsetzen kann. Bevorzugt handelt es sich um einen bidirektionalen Wechselrichter, über den in umgekehrter Richtung die Batterie des angeschlossenen Batteriemoduls mit Gleichstrom geladen werden kann. Die Batterie kann auf diese Weise zur Stromversorgung der Verbrauchereinheit beitragen und / oder dem System überschüssigen Strom entnehmen.

Der Fotovoltaik-Wechselrichter und der Batteriewechselrichter können in einer einzigen Wechselrichtereinheit kombiniert sein. In diesem Fall teilen sich die Fotovoltaik-Anlage und die Batterie eines Batteriemoduls einen einzigen Wechselrichter zur Umwandlung der jeweiligen Fotovoltaik- bzw. Batteriegleichspannung auf die gewünschte Wechselspannung. Vorzugsweise ist jedoch der Batteriewechselrichter eine von dem Fotovoltaik-Wechselrichter separat ausgebildete Einheit.

Das erfindungsgemäße System weist ferner ein Batteriemodul auf. Es handelt sich dabei um eine handhabbare und transportable Einheit. Das Gehäuse des Batteriemoduls enthält die wiederaufladbare Batterie sowie die weiteren Bestandteile des Moduls. Es bewirkt Handhabbarkeit sowie Schutz vor äußeren Einflüssen wie beispielsweise Umwelteinflüssen. Es ist ferner ein DC-Anschluss zum externen Laden und/oder Entladen der Batterie vorhanden. Dieser Anschluss dient der Verbindung der Batterie mit dem erfindungsgemäßen System und erlaubt einen bidirektionalen Betrieb (Laden/Entladen).

Eine wiederaufladbare Batterie speichert elektrische Energie elektrochemisch. Erfindungsgemäß können alle Typen wiederaufladbarer Batterien zum Einsatz kommen. Besonders bevorzugt sind wiederaufladbare Batterien vom Li-Ion-Typ. Beispielhaft genannt seien LiFePO4-Batterien, die aufgrund des festen Elektrolyten und der Zellchemie eine gute Eigensicherheit aufweisen, ferner eine hohe Leistungsdichte, hohe Impulsbelastbarkeit und schnellladefähig sind. Ein flaches Spannungsprofil bei Ladung und Entladung fördert eine gleichmäßige Leistungsabgabe über einen Entladezyklus.

Die Zustands sensoren sind wenigstens zur Erfassung von Temperatur und Ladezustand (SoC, state of charge) der Batterie ausgebildet. Mittels der Zustandssensoren kann sichergestellt werden, dass ein Betrieb der Batterie nur innerhalb eines vorgesehenen Betriebsfensters (beispielsweise Temperatur, Spannung, Lade- oder Entnahmestrom) erfolgt.

Bevorzugt erlauben die Zustandssensoren eine Einzelzellüberwachung, vorteilhaft ist insbesondere eine separate Messung von Temperatur und Spannung und / oder Stromfluss jeder einzelnen Zelle. Bei einer großen Menge von Einzelzellen kann auch eine Mehrzahl von Sensoren vorgesehen sein.

Der Erfassung des Ladezustands der Batterie kann auf im Stand der Technik grundsätzlich bekannte Art und Weise erfolgen. Beispielhaft genannt seien Bilanzierung von Lade- und Entnahmestrom, Ruhespannungsmethode, Innenwiderstandsmessung sowie Impedanz-basierte Methoden.

Das Batteriemanagementsystem stellt sicher, dass der Betrieb der wiederaufladbaren Batterie innerhalb eines vorgegebenen Betriebsfensters erfolgt. Insbesondere werden Ladestrom und/oder Entnahmestrom gesteuert, geregelt und/oder begrenzt, dass ein sicherer Betrieb und eine Vermeidung von unerwünschten Betriebszuständen wie beispielsweise Tiefentladung oder insbesondere bei Lithium-Ionen-Batterien mögliche instabile Betriebszustände (thermischer Runaway) vermieden werden.

Das erfindungsgemäße Batteriemodul enthält zusätzlich ein Energiemanagementsystem. Dieses dient zur Steuerung von Ladung und/oder Entladung der Batterie in Abhängigkeit von vorgebbaren Randbedingungen. Bei diesen Randbedingungen kann es sich insbesondere um die Vorgabe eines bestimmten minimalen Ladezustands zu einem bestimmten Zeitpunkt handeln.

Diese Randbedingungen können über eine Kommunikationsschnittstelle mit dem Energiemanagementsystem ausgetauscht werden. Die Kommunikationsschnittstelle kann drahtgebunden oder drahtlos mit einer Eingabevorrichtung, beispielsweise einem Bedienfeld, einem Touch-Display, oder auch einem Personal-Computer oder einem Mobiltelefon eines Benutzers in Verbindung stehen.

Die Erfindung unterscheidet zwischen Batteriemanagementsystem und Energiemanagementsystem. Das Batteriemanagementsystem dient lediglich der Sicherung des Betriebs der Batterie im vorgesehenen Betriebsfenster, ohne sonstige Randbedingungen in Betracht zu ziehen. Hingegen nimmt das Energiemanagementsystem Einfluss auf den Betrieb (insbesondere Ladung und/oder Entladung) der Batterie unter Berücksichtigung solcher Randbedingungen.

Das Energiemanagementsystem kann erfindungsgemäß zusätzlich weitere Randbedingungen berücksichtigen und anhand dieser die Ladung/Entladung der Batterie steuern. Insbesondere kann das Energiemanagementsystem die Ladung/Entladung steuern unter Berücksichtigung von von der Verbrauchereinheit benötigten elektrischen Leistung, dem Ertrag der angeschlossenen Fotovoltaik-Anlage, dem aktuellen Strompreis bei Bezug von Energie aus dem öffentlichen Netz etc. Im Rahmen der Erfindung kann somit das im Batteriemodul integrierte Energiemanagementsystem zur Steuerung des Gesamtsystems ausgebildet sein und beispielsweise als Randbedingungen die Maximierung des Eigenverbrauchs von regenerativ erzeugter Energie durch die Verbrauchereinheit sowie die Sicherstellung eines minimalen Ladezustands zu einem vorgegebenen Zeitpunkt berücksichtigen.

Die Möglichkeit der Gewährleistung eines Mindest-Ladezustands ist insbesondere in Kombination mit der handlichen und transportablen Ausgestaltung des erfindungsgemäßen Batteriemoduls vorteilhaft. Das Batteriemodul kann beispielsweise zu einem anderen System, beispielsweise zu einem Ferienhaus ohne eigenen Anschluss an ein öffentliches Stromnetz transportiert werden und dort zur Energieversorgung beitragen. Ein weiteres Beispiel ist der Einsatz des Batteriemoduls für den Antrieb eines elektrischen Zweirades. Das System ermöglicht es, sicherzustellen, dass mit Zweirad zum gewünschten Zeitpunkt aufgrund des Mindest-Ladezustands eine gewünschte Wegstrecke zurückgelegt werden kann.

Weiterhin kann das Energiemanagementsystem auch Einfluss nehmen auf Verbraucher der Verbrauchereinheit und diese in Abhängigkeit beispielsweise vom Ertrag regenerativer Energie und dem Ladezustand der Batterie zu- oder abschalten, wenn es sich um nicht oder weniger zeitkritische Verbraucher wie beispielsweise Kühlanlagen, Waschmaschinen oder dergleichen handelt. Als weitere mögliche Randbedingung kann z.B. vorgegeben werden, dass die Batterie zu einem bestimmten Zeitpunkt oder in einem bestimmten Zeitraum nur dann geladen wird, sofern regenerativ erzeugte Energie zur Verfügung steht.

Bei einer bevorzugten Variante der Erfindung wird der Energiefluss im System bei angeschlossenem Batteriemodul durch das Energiemanagementsystem des Batteriemoduls wenigstens teilweise gesteuert. Dies bedeutet, dass das Energiemanagementsystem des Batteriemoduls zumindest in dem Umfang Einfluss auf die Ladung/Entladung der Batterie nimmt, dass vorgegebene Randbedingungen wie insbesondere ein Mindestladezustand zu einem vorgegebenen Zeitpunkt gewährleistet sind. Als weitere Randbedingungen können Ladepräferenzen eines Benutzers einbezogen werden, beispielsweise kann vorgesehen sein, dass Fotovoltaik-Strom bevorzugt zur Ladung der Batterie verwendet wird. Zu diesem Zweck muss das Energiemanagementsystem über die Kommunikationsschnittstelle zumindest den Fotovoltaik-Wechselrichter bzw. den Batteriewechselrichter entsprechend steuern bzw. beeinflussen.

Diese Kommunikation kann drahtlos oder drahtgebunden erfolgen. In einer bevorzugten Variante kann dies über die stromführenden Anschlüsse mittels der sogenannten Power Line Communication (PLC) oder bevorzugt mittels Modbus erfolgen.

Sofern stationär im System ebenfalls ein separates Energiemanagementsystem vorhanden ist, kommunizieren die beiden Energiemanagementsysteme miteinander und das Energiemanagementsystem des Batteriemoduls stellt sicher, dass die für die Mobilität erforderlichen Randbedingungen (Ladezustand) eingehalten werden.

Das System kann einen ersten Betriebszustand bei angeschlossenem Batteriemodul und einen zweiten Betriebszustand bei nicht verbundenen Batteriemodul aufweisen. Ohne angeschlossenes Batteriemodul kann das System vollkommen ohne Energiemanagementsystem auskommen, es findet dann eine einfache Saldierung der Erzeugung der Fotovoltaik-Anlage, des Verbrauchs der Verbrauchereinheit sowie des Bezugs aus bzw. Einspeisung in den Netzanschluss statt.

Erfindungsgemäß kann vorgesehen sein, dass das System zum Anschluss einer Mehrzahl von Batteriemodulen ausgebildet ist. Beispielsweise können bei einem Gewerbebetrieb tagsüber eine Mehrzahl von elektrischen Zweirädern angeschlossen und gemeinsam im Sinne einer Energiebank betrieben werden. Bevorzugt wird dann die Steuerung des Gesamtsystems vom Energiemanagementsystem eines Rollers (Master) übernommen, die weiteren angeschlossenen Roller werden lediglich als so genannter Slave betrieben. Jedoch kann auch bei einem solchen Master/Slave-Betrieb das Energiemanagementsystem eines jeden Rollers (auch des Slave) in dem Umfang betrieben werden, dass zum gewünschten Zeitpunkt ein Mindestladezustand sichergestellt ist. Bei einer Energiebank mit einer Mehrzahl von angeschlossenen Batteriemodulen erfolgt bevorzugt die Entladung/Ladung seriell, nicht parallel.

Erfindungsgemäß kann vorgesehen sein, dass das System zusätzlich ein stationäres Energiemanagementsystem aufweist. Dies kann insbesondere dann von Vorteil sein, wenn das System gemäß einer Weiterbildung zusätzlich eine stationäre wiederaufladbare Batterie aufweist. In diesem Fall steuert das stationäre Energiemanagementsystem bei nicht verbundenen Batteriemodul das Gesamtsystem einschließlich stationärer wiederaufladbarer Batterie. Im angeschlossenen Zustand eines Batteriemoduls erfolgt bevorzugt ein Master/Slave-Betrieb von stationärer Batterie und der Batterie des angeschlossenen Batteriemoduls.

Das stationäre Energiemanagementsystem kann zusätzlich eine Datenauswertung betreiben und/oder diese Daten in aufbereiteter Form zur Verfügung stellen und so den Benutzer beispielsweise über Energiebilanzen, Eigenverbrauchsanteile etc. informieren.

Gegenstand der Erfindung ist weiterhin ein wie oben beschriebenes erfindungsgemäßes Batteriemodul, welches zum Antrieb eines elektrischen Zweirads ausgebildet ist. Ein weiterer Gegenstand der Erfindung ist ein elektrisches Zweirad mit einem erfindungsgemäßen Batteriemodul.

Elektrische Zweiräder sind aus offenkundiger Vorbenutzung bekannt. Es kann sich beispielsweise um elektrisch betriebene Motorräder, Motorroller oder Fahrräder mit Hilfsmotor handeln.

EP 1 215 111 A1 offenbart einen elektrisch betriebenen Motorroller, bei dem ein Batteriemodul mit integriertem Ladegerät als herausnehmbare Einheit ausgebildet ist. Dies erlaubt ein Laden ohne separates Ladegerät entweder im eingebauten oder im herausgenommenen Zustand.

Bezüglich des erfindungsgemäßen Batteriemoduls kann die Aufgabe der vorliegenden Erfindung darin gesehen werden, ein Batteriemodul der eingangs genannten Art zu schaffen, das eine verbesserte Einbindung von Elektromobilität in ein System regenerativ erzeugter elektrischer Energie ermöglicht.

Die Erfindung löst diese Aufgabe bei einem mit einem Gehäuse und einer darin angeordneten wiederaufladbaren Batterie, das zum Antrieb eines elektrischen Zweirads ausgebildet ist, dadurch, dass es weiterhin aufweist:
a) Zustandssensoren, die zur Erfassung wenigstens von Temperatur und Ladezustand der Batterie ausgebildet sind,
b) ein Batteriemanagementsystem, das den Betrieb der wiederaufladbaren Batterie innerhalb eines vorgegebenen Betriebsfensters gewährleistet,
c) ein Energiemanagementsystem, das zur Steuerung von Ladung und/oder Entladung der Batterie in Abhängigkeit von vorgebbaren Randbedingungen ausgebildet ist,
d) eine Kommunikationsschnittstelle, über die das Energiemanagementsystem Steuerungsdaten, Regelungsdaten und/oder Randbedingungen senden und/oder empfangen kann,
e) einen DC-Anschluss zur Verbindung mit dem elektrischen Zweirad,
f) einen DC-Anschluss zum externen Laden und/oder Entladen.

Zunächst seien einige im Rahmen der Erfindung verwendete Begriffe erläutert.

Das Batteriemodul sowie die darin angeordnete Batterie sind zum Antrieb eines elektrischen Zweirads ausgebildet. Dies bedeutet, dass Kapazität sowie entnehmbare Leistung der Batterie an die Gegebenheiten des Zweirads angepasst sind. Die Kapazität kann beispielsweise im Bereich von einigen hundert Wh, bspw. etwa 400 Wh bis etwa 12 kWh liegen. Kapazitäten im Bereich 400 bis 1000 Wh können beispielsweise bei Fahrrädern mit elektrischem Hilfsmotor oder Pedelecs eingesetzt werden, Batterien mit höherer Kapazität von beispielsweise 3 bis 12 kWh bei elektrisch betriebenen Motorrollern oder Motorrädern. Die entnehmbare Leistung kann beispielsweise bei 1C bis 10C liegen. Die entnehmbare Leistung ist hier angegeben in vielfachen der Nennkapazität. Liegt die Nennkapazität beispielsweise bei 5 kWh und die entnehmbare Leistung bei 3C, können der Batterie maximal 15 kW Leistung entnommen werden.

Das Batteriemodul weist einen DC-Anschluss zur Verbindung mit dem elektrischen Zweirad auf. Dieser ist so ausgebildet, dass die für den Betrieb des Zweirads erforderliche Leistung entnommen werden kann und gegebenenfalls durch Rekuperation im Bremsbetrieb gewonnene Energie rückgespeist werden kann.

Es ist ferner ein DC-Anschluss zum externen Laden und/oder Entladen vorhanden. Dieser Anschluss dient insbesondere der Verbindung mit einem vorstehend bereits beschriebenen Gesamtsystem und erlaubt einen bidirektionalen Betrieb (Laden/Entladen).

Erfindungsgemäß kann das Batteriemodul einen einzigen DC-Anschluss aufweisen, der sowohl zur Verbindung mit dem elektrischen Zweirad als auch zum externen Laden/Entladen ausgebildet ist, bevorzugt sind jedoch separate Anschlüsse.

Ein solches Batteriemodul kann auf einfache und ökonomische Weise in ein System zur Versorgung einer Verbrauchereinheit mit Netzspannung eingebunden werden. Insbesondere können, wie oben bereits in Verbindung mit dem erfindungsgemäßen System erläutert, Randbedingungen über die Kommunikationsschnittstelle mit dem Energiemanagementsystem ausgetauscht werden. Die Kommunikationsschnittstelle kann drahtgebunden oder drahtlos mit einer Eingabevorrichtung beispielsweise angeordnet am elektrischen Zweirad oder einer separaten Eingabevorrichtung in Verbindung stehen. Es ist ebenfalls möglich, dass das Energiemanagementsystem oder ein zusätzlicher Mikroprozessor geeignete Randbedingungen wie beispielsweise einen Mindestladezustand selbsttätig errechnet anhand von Benutzerdaten, indem es Fahrstrecken und Fahrprofile des Benutzers auswertet.

Die Erfindung schafft ein Batteriemodul, das als kompakte Einheit innerhalb eines Gehäuses zum einen einen Betrieb als Antriebsbatterie für ein elektrisches Zweirad erlaubt und zum anderen durch das im Gehäuse integrierte Energiemanagementsystem eine zusätzliche stationäre Nutzung des Moduls bei stationär geparktem Roller als Speicherbatterie in einem Gesamtsystem zur Versorgung einer Verbrauchereinheit mit Netzspannung geeignet ist. Das integrierte Energiemanagementsystem sorgt insbesondere dafür, dass beim stationären Betrieb als Speicherbatterie die zukünftigen Mobilitätsanforderungen berücksichtigt werden, dass also zu einem bestimmten Zeitpunkt eine vorgegebene Mindestladung der Batterie zur Verfügung steht.

Die Ausgestaltung als kompakte Einheit mit der Anordnung der Bestandteile im Gehäuse (einschließlich der "Intelligenz" des Energiemanagementsystems) bewirkt eine hohe Wartungsfreundlichkeit, da die gesamte Einheit mit sämtlichen Bestandteilen auf einfache Art und Weise ausgetauscht und das Modul als Einheit einer Wartung oder Reparatur zugeführt werden kann.

Das erfindungsgemäße Batteriemodul weist bevorzugt kein Ladegerät auf. Der Begriff Ladegerät bezeichnet eine Funktionseinheit, die zur Spannungswandlung und oder AC/DC-Wandlung ausgebildet ist und so insbesondere die Ladung der Batterie durch Anschluss an ein übliches AC-Netz erlaubt. Um dennoch eine Ladung der Batterie bei einem Betrieb des elektrischen Zweirads beispielsweise für eine längere Strecke entfernt von der Verbrauchereinheit des Gesamtsystems (dort findet eine Ladung über den DC-Anschluss statt) zu ermöglichen, kann beispielsweise vorgesehen sein, dass das elektrische Zweirad ein integriertes Ladegerät aufweist, das damit nicht Bestandteil des Batteriemoduls ist. Der Anschluss des Ladegeräts an das Batteriemodul kann über einen der genannten DC-Anschlüsse oder gegebenenfalls einen zusätzlichen Ladeanschluss erfolgen.

Das Gehäuse des Batteriemoduls und damit das Modul insgesamt weisen bevorzugt wenigstens die Schutzklasse IP65 auf. Diese Schutzklasse erlaubt den Allwetterbetrieb in einem elektrischen Zweirad ohne weitere Schutzmaßnahmen. Das Modul kann somit unmittelbar den Witterungseinflüssen ausgesetzt werden. Die Anordnung aller genannten Bestandteile innerhalb des Gehäuses erleichtert die Ausbildung in der Schutzklasse IP65, da im Wesentlichen ausschließlich elektrische Anschlüsse und Leistungsanschlüsse nach außen geführt werden müssen. Bevorzugt ist ein Gehäuse aus einem geeigneten Metall oder einem schlagzähen Kunststoff.

Es ist im Rahmen der Erfindung weiter bevorzugt, wenn das Batteriemodul im Falle der Ausbildung der Batterie als Lithium-Ionen-Batterie den Anforderungen des "Sicherheitsleitfadens für Li-Ionen-Hausspeicher" Ausgabe 11/2014, abrufbar (Stand 02/2016) unter https://www.tuv.com/media/germany/30_pro-ducts/formulare/Sicherheitsleitfaden_Li-Ionen_Hausspeicher.pdf entspricht. Dies stellt sicher, dass sich das Batteriemodul im stationären Betrieb gefahrlos in die Stromversorgung einer Verbrauchereinheit wie beispielsweise eines Haushaltes integrieren lässt.

Bei einer bevorzugten Ausführungsform der Erfindung weist die Batterie eine Kapazität von 2 bis 12 kWh, vorzugsweise 3,2 bis 6 kWh auf. Dieser Kapazitätsbereich erlaubt zum einen einen sinnvollen Betrieb eines elektrischen Zweirads mit angemessener Reichweite zumindest für übliche innerstädtische Strecken, zum anderen ist die Kapazität hinreichend groß, dass das Batteriemodul als Bestandteil eines Gesamtsystems zur Versorgung einer Verbrauchereinheit mit dem Strombedarf eines üblichen Haushalts einen relevanten Beitrag leisten kann, beispielsweise zur Erhöhung des Eigenverbrauchsanteils, wenn das Gesamtsystem eine Fotovoltaik-Anlage aufweist und das Batteriemodul im stationären Betrieb fotovoltaisch erzeugte Energie zwischenspeichern und dann wieder abgeben kann, wenn der Bedarf der Verbrauchereinheit die Erzeugung durch die Fotovoltaik-Anlage übersteigt.

Die Gesamtmasse eines erfindungsgemäßen Batteriemoduls kann im Bereich 25 bis 100 kg, vorzugsweise 40 bis 70 kg liegen. Dies erlaubt einerseits eine vernünftige Handhabung als Bestandteil eines Zweirads, andererseits eine hinreichend stabile Ausführung und genügende Speicherkapazität.

Gegenstand der Erfindung ist ferner ein elektrisches Zweirad, das ein erfindungsgemäßes Batteriemodul aufweist. Bevorzugt handelt es sich um einen elektrisch betriebenen Motorroller oder ein Motorrad. Das Batteriemodul ist bevorzugt demontierbar beispielsweise mit dem Rahmen des Zweirads verbunden. Der Rahmen kann bevorzugt eine Aufnahme für das Batteriemodul aufweisen, in die das Batteriemodul von unten einsetzbar und befestigbar ist. Die Montage von unten erleichtert das Wechseln des verhältnismäßig schweren Batteriemoduls und ermöglicht eine Modularität zur Anpassung der erforderlichen Gesamtkapazität an die Rahmenbedingungen sowie eine erhöhte Servicefreundlichkeit.

Es kann vorgesehen sein, dass das Batteriemodul im montierten Zustand den Rahmen verstärkt. Es kann dadurch insbesondere zum tragenden Bauelement des Zweirades werden.

Das erfindungsgemäße Zweirad kann ein Kommunikationsmodul aufweisen, das zur Kommunikation mit dem Energiemanagementsystem über die Kommunikationsschnittstelle ausgebildet ist und eine Benutzerschnittstelle aufweist, die zur Erfassung von Randbedingungen ausgebildet ist. Bei der Benutzerschnittstelle kann es sich beispielsweise um eine Eingabeeinheit handeln, über die der Benutzer Mobilitätswünsche (beispielsweise Zeitpunkt und vorgesehene Strecke der nächsten Fahrt) eingeben kann. Die Benutzerschnittstelle kann jedoch auch zur Kommunikation mit einer separaten Einheit ausgebildet sein, beispielsweise dem Mobiltelefon eines Benutzers, über das entsprechende Vorgaben gemacht werden können. Ferner kann die Benutzerschnittstelle zur automatischen Auswertung des Mobilitätsverhaltens des Benutzers ausgebildet sein und anhand dessen (gegebenenfalls in Kombination mit Vorgaben des Benutzers) selbsttätig bestimmte Ladezustände zu bestimmten Zeitpunkten sicherstellen.

Die Erfindung wird im Folgenden anhand von vorteilhaften Ausführungsformen beispielhaft unter Bezugnahme auf die beigefügten Zeichnungen beschrieben. Es zeigen:
- Figur 1:: einen erfindungsgemäßen elektrischen Motorroller in einer Seitenansicht;
- Figur 2:: den Rahmen und das Batteriemodul eines erfindungsgemäßen elektrischen Motorrollers in einer Seitenansicht;
- Figur 3:: den Rahmen und das Batteriemodul eines erfindungsgemäßen elektrischen Motorrollers in einer Frontansicht;
- Figur 4:: den Rahmen und das Batteriemodul eines erfindungsgemäßen elektrischen Motorrollers in einer dreidimensionalen Schrägansicht;
- Figur 5:: den Rahmen und das Batteriemodul eines erfindungsgemäßen elektrischen Motorrollers in einer Ansicht von oben;
- Figur 6:: ein schematisches Blockschaltbild eines erfindungsgemäßen Systems zur Versorgung einer Verbrauchereinheit mit Netzspannung, welches ein erfindungsgemäßes Batteriemodul umfasst.

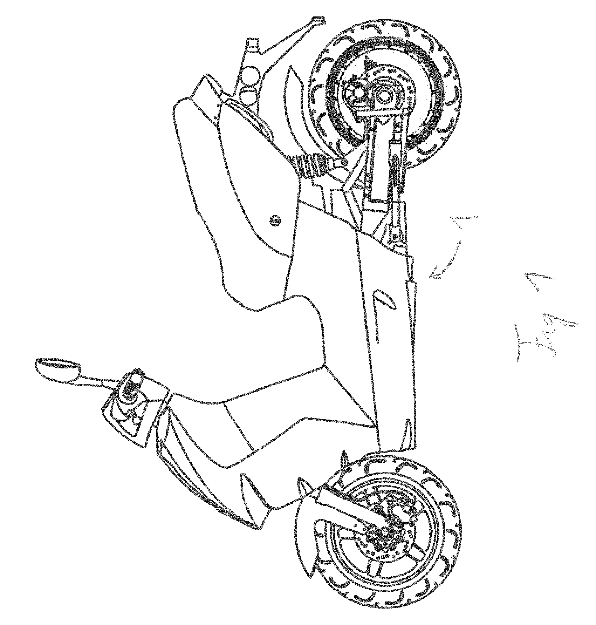

Die Figur 1 zeigt einen erfindungsgemäßen Motorroller in einer Seitenansicht. Der Motorroller weist ein erfindungsgemäßes Batteriemodul 1 auf, welches im unteren Bereich eines Rahmens zwischen einem Vorderrad und einem Hinterrad des Rollers angeordnet ist. Das Batteriemodul ist in Figur 1 von der Verkleidung des Motorrollers verdeckt.

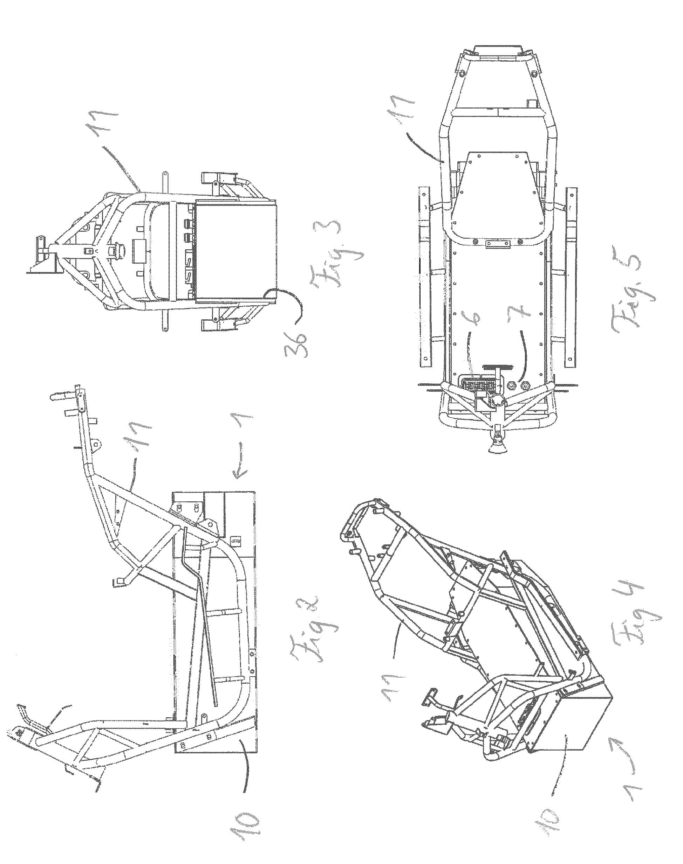

Die Figuren 2 bis 5 zeigen einen Rahmen 11 und ein Batteriemodul 1 des erfindungsgemäßen elektrischen Motorrollers in einer Seitenansicht, einer Frontansicht, einer dreidimensionalen Schrägansicht und in einer Ansicht von oben. Das Batteriemodul 1 weist ein Gehäuse 10 auf und ist in eine am unteren Teil des Rahmens 11 angeordnete Aufnahme 36 eingesetzt. Mit Hilfe von Schrauben ist das Batteriemodul 1 am unteren Teil des Rahmens 11 befestigt. Es hat ein Gewicht von 65 kg und erhöht in montiertem Zustand die Stabilität des Rahmens 11. Nach einem Lösen der Schrauben kann das das Batteriemodul 1 nach unten hin vom Rahmen 11 entfernt werden und ist somit leicht austauschbar bzw. kann leicht bspw. zur Wartung entfernt und wieder eingesetzt werden. Das Batteriemodul 1 umfasst ferner eine in Figur 5 erkennbare Kommunikationsschnittstelle 6, über die das Batteriemodul 1 Daten senden und empfangen kann.

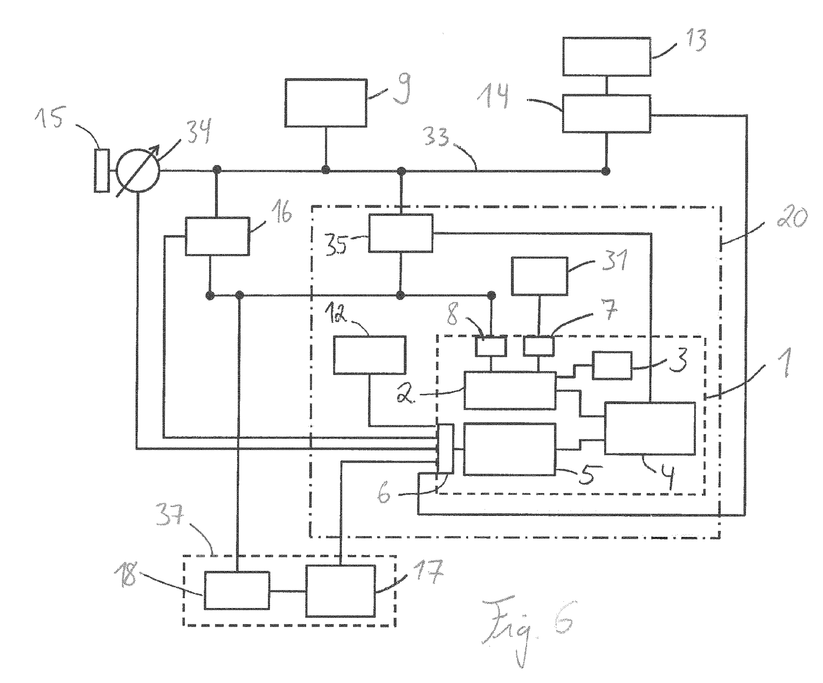

In Figur 5 ist auch ein DC-Anschluss 8 zu sehen, über den im Batteriemodul angeordnete Batterien (nicht gezeigt) geladen oder entladen werden können. Über einen weiteren DC-Anschluss, welcher in den Figuren 2-5 nicht gezeigt ist, kann das Batteriemodul mit dem elektrischen Motorroller und insbesondere mit einem Elektromotor des Motorrollers verbunden werden, um diesen mit Energie zu versorgen. Das erfindungsgemäße Batteriemodul 1 eignet sich nicht nur zur Stromversorgung des Elektromotors, sondern es kann auch innerhalb eines erfindungsgemäßen Systems zur Versorgung einer Verbrauchereinheit verwendet werden. Das System sowie dessen Zusammenwirken mit dem Batteriemodul wird nachfolgend anhand der Figur 6 genauer erläutert.

Figur 6 zeigt das erfindungsgemäße System zur Versorgung einer Verbrauchereinheit 9 mit Netzspannung in einer schematischen Blockdiagrammansicht. Die Verbrauchereinheit 9 kann beispielsweise ein Haushalt sein. Das erfindungsgemäße System umfasst eine Fotovoltaikanlage 13, welche dazu ausgestaltet ist, Licht in elektrischen Strom umzuwandeln. Die Fotovoltaikanlage 13 ist mit einem Fotovoltaik-Wechselrichter 14 verbunden, welcher den von der Fotovoltaikanlage 13 erzeugten Strom in einen Dreiphasen-Wechselstrom umwandelt und in ein Wechselstromnetz 33 einspeist. Das Wechselstromnetz 33 ist außerdem über einen Stromzähler 34 und einen Netzanschluss 15 an ein öffentliches Stromnetz (nicht gezeigt) angeschlossen, sowie mit einem Batteriewechselrichter 16 verbunden. Über das Wechselstromnetz 33 wird die Verbrauchereinheit 9 mit Strom versorgt.

Das System umfasst weiterhin einen erfindungsgemäßen Motorroller 20, welcher schematisch durch die strichpunktierte Linie dargestellt ist. Der Motorroller 20 weist - wie oben in Verbindung mit den Figuren 2 bis 5 beschrieben - ein erfindungsgemäßes Batteriemodul 1 auf. Zudem umfasst der Motorroller ein internes Ladegerät 35 zum Laden der Batterie, einen Elektromotor 31, welcher als Antriebseinheit des Motorrollers dient, sowie ein Kommunikationsmodul 12.

Ein erfindungsgemäßes Batteriemodul 1 ist schematisch durch die gestrichelte Linie dargestellt. Es sei darauf hingewiesen, dass der Motorroller 20 für das erfindungsgemäße System nicht zwangsläufig erforderlich ist. Das erfindungsgemäße Batteriemodul 1 kann auch direkt mit dem erfindungsgemäßen System zur Versorgung einer Verbrauchereinheit 9 verbunden werden.

Im Batteriemodul 1 ist eine wiederaufladbare aus mehreren Zellen bestehende LiFePO4-Batterie 2 angeordnet, welche eine Leistung von 2 C und eine Kapazität von 5,2 kWh aufweist. Mit der Batterie 2 ist ein Zustandssensor 3 verbunden, welcher zur Überwachung der Temperatur jeder Zelle, des Gesamtladezustands sowie des Gesamtstromflusses ausgestaltet ist. Wie oben bereits erläutert ist die Batterie 2 über einen DC-Anschluss 7 mit dem Elektromotor 31 verbunden. Zum Laden bzw. Entladen der Batterie 2 ist ein weiterer DC-Anschluss 8 vorhanden. Die Batterie kann, wie oben erläutert, über das interne Ladegerät 35 geladen werden. Außerdem kann die Batterie mit dem Batteriewechselrichter verbunden werden und über diesen geladen und / oder entladen werden.

Das Batteriemodul 1 weist weiterhin ein Batteriemanagementsystem 4 auf, welches den Lade- und Entladestrom der Batterie 2 steuert und so einen sicheren Betrieb der Batterie gewährleistet.

Schließlich umfasst das erfindungsgemäße Batteriemodul 1 ein Energiemanagementsystem 5 sowie eine Kommunikationsschnittstelle 6. Über die Kommunikationsschnittstelle 6 können dem Energiemanagementsystem 5 Randbedingungen vorgegeben werden, gemäß denen das Energiemanagementsystem 5 die Ladung/Entladung der Batterie 2 steuert. Das Energiemanagementsystem kann dazu Steuerungsbefehle abgeben, z.B. an den Batteriewechselrichter 16 oder an das Batteriemanagementsystem 4.

Als Randbedingung kann ein Benutzer beispielsweise vorgeben, dass die Batterie zu einem bestimmten Zeitpunkt (nachfolgend "Startzeitpunkt") einen bestimmten Ladezustand nicht unterschreiten soll. Das Energiemanagementsystem sorgt in diesem Fall für die Einhaltung dieser Randbedingung, so dass sichergestellt ist, dass der Benutzer zum gewünschten Startzeitpunkt eine gewünschte Wegstrecke mit dem Motorroller zurücklegen kann. Dazu kann ein Aufladen der Batterie bis zum gewünschten Ladezustand erforderlich sein.

Zudem ermöglicht das erfindungsgemäße Energiemanagementsystem eine besonders einfache und vorteilhafte Integration der Batterie 2 in das erfindungsgemäße System zur Versorgung der Verbrauchereinheit 9. Insbesondere kann die Batterie 2 auf diese Weise unter Berücksichtigung der Randbedingungen zur Energieversorgung der Verbrauchereinheit 9 beitragen oder unter Berücksichtigung der Randbedingungen über das Wechselstromnetz 33 und den Batteriewechselrichter 16 geladen werden.

Falls beispielsweise die Batterie vor dem oben genannten Startzeitpunkt einen höheren Ladezustand als nötig aufweist und die Verbrauchereinheit 9 im Zeitraum vor dem Startzeitpunkt Energie benötigt, ist auch eine Entladung der Batterie und somit eine Einspeisung von Energie über den Batteriewechselrichter in das Wechselspannungsnetz möglich, bis der gewünschte Ladezustand erreicht ist. In jedem Fall gewährleistet das erfindungsgemäße Energiemanagementsystem jedoch, dass die Randbedingung eingehalten wird.

Zur Vorgabe von Randbedingungen kann die Kommunikationsschnittstelle 6 drahtlos beispielsweise mit einem Mobiltelefon eines Benutzers verbunden werden. Zudem ist die Kommunikationsschnittstelle 6 mit dem Kommunikationsmodul 12 des Motorrollers 20 verbunden. Der Benutzer kann somit über sein Mobiltelefon oder über das Kommunikationsmodul 12 Randbedingungen vorgeben.

Die Kommunikationsschnittstelle 6 ist zudem mit dem Fotovoltaik-Wechselrichter 14 sowie mit dem Stromzähler 34 verbunden, und erhält von diesen beiden Elementen ebenfalls Randbedingungen, welche zur Steuerung von Ladung und/oder Entladung der Batterie verwendet werden können. Möglich ist auch eine Verbindung der Kommunikationsschnittstelle mit einer Datenbank für aktuelle Strompreise. So kann der Energiebedarf des Haushalts, der aktuelle Strompreis, sowie die aktuelle Solarstromproduktion als Randbedingung bei der Ladung bzw. Entladung der Batterie berücksichtigt werden. Es kann dadurch beispielsweise an Zeiten, in denen nur ein geringer Ertrag durch die Einspeisung von Solarstrom in das öffentliche Netz erzielt werden kann, der Eigenverbrauch von Solarstrom erhöht werden, indem die Batterie durch selbsterzeugten Solarstrom geladen wird.

Das in Figur 6 gezeigte System umfasst weiterhin ein stationäres Batteriemodul 37 mit einer Batterie 18 und einem eigenen Energiemanagementsystem 17. Die Batterie 18 ist über den Batteriewechselrichter 16 an das Wechselstromnetz 33 angeschlossen und kann somit ebenfalls über das Wechselstromnetz 33 geladen oder entladen werden. Über die Kommunikationsschnittstelle 6 kommunizieren die Energiemanagementsysteme 5 und 17 miteinander, wobei das Energiemanagementsystem 5 sicherstellt, dass die oben genannten Randbedingungen eingehalten werden.

## Patentansprüche

1. System zur Versorgung einer Verbrauchereinheit (9) mit Netzspannung, das aufweist:
a) eine Fotovoltaik-Anlage (13),
b) einen Fotovoltaik-Wechselrichter (14),
c) einen Netzanschluss (15),
**dadurch gekennzeichnet, dass** es weiter aufweist:
d) einen Batteriewechselrichter (16),
e) ein mobiles, anschließbares Batteriemodul mit einem Gehäuse (10) und einer darin angeordneten wiederaufladbaren Batterie (2), wobei das Batteriemodul aufweist:
(i) Zustandssensoren (3), die zur Erfassung wenigstens von Temperatur und Ladezustand der Batterie (2) ausgebildet sind,
(ii) ein Batteriemanagementsystem (4), das den Betrieb der wiederaufladbaren Batterie (2) innerhalb eines vorgegebenen Betriebsfensters gewährleistet,
(iii) ein Energiemanagementsystem (5), das zur Steuerung von Ladung und/oder Entladung der Batterie (2) in Abhängigkeit von vorgebbaren Randbedingungen ausgebildet ist,
(iv) eine Kommunikationsschnittstelle (6), über die das Energiemanagementsystem (5) Steuerungsdaten, Regelungsdaten und/oder Randbedingungen senden und/oder empfangen kann,
(v) einen DC-Anschluss (8) zum externen Laden und/oder Entladen.

2. System nach Anspruch 1, **dadurch gekennzeichnet, dass** der Energiefluss im System bei angeschlossenem Batteriemodul (1) durch das Energiemanagementsystem (5) des Batteriemoduls (1) wenigstens teilweise gesteuert wird.

3. System nach Anspruch 1 oder 2, **dadurch gekennzeichnet, dass** es einen ersten Betriebszustand bei angeschlossenem Batteriemodul (1) und einen zweiten Betriebszustand bei nicht verbundenem Batteriemodul (1) aufweist.

4. System nach einem der Ansprüche 1 bis 3, **dadurch gekennzeichnet, dass** es zum Anschluss einer Mehrzahl von Batteriemodulen (1) ausgebildet ist.

5. System nach einem der Ansprüche 1 bis 4, **dadurch gekennzeichnet, dass** es zusätzlich ein stationäres Energiemanagementsystem (17) aufweist.

6. System nach Anspruch 5, **dadurch gekennzeichnet, dass** es zusätzlich eine stationäre wiederaufladbare Batterie (18) aufweist.

7. Batteriemodul, mit einem Gehäuse (10) und einer darin angeordneten wiederaufladbaren Batterie (2), das zum Antrieb eines elektrischen Zweirads ausgebildet ist, **dadurch gekennzeichnet, dass** es aufweist:
a) Zustandssensoren (3), die zur Erfassung wenigstens von Temperatur und Ladezustand der Batterie (2) ausgebildet sind,
b) ein Batteriemanagementsystem (4), das den Betrieb der wiederaufladbaren Batterie (2) innerhalb eines vorgegebenen Betriebsfensters gewährleistet,
c) ein Energiemanagementsystem (5), das zur Steuerung von Ladung und/oder Entladung der Batterie (2) in Abhängigkeit von vorgebbaren Randbedingungen ausgebildet ist,
d) eine Kommunikationsschnittstelle (6), über die das Energiemanagementsystem (5) Steuerungsdaten, Regelungsdaten und/oder Randbedingungen senden und/oder empfangen kann,
e) einen DC-Anschluss (7) zur Verbindung mit dem elektrischen Zweirad,
f) einen DC-Anschluss (8) zum externen Laden und/oder Entladen.

8. Batteriemodul nach Anspruch 7, **dadurch gekennzeichnet, dass** das Gehäuse (10) wenigstens die Schutzklasse IP65 aufweist.

9. Batteriemodul nach Anspruch 7 oder 8, **dadurch gekennzeichnet, dass** die Batterie (2) eine Kapazität von 2 bis 10 kWh, vorzugsweise 3,2 bis 6 kWh aufweist.

10. Batteriemodul nach einem der Ansprüche 7 bis 9, **dadurch gekennzeichnet, dass** es eine Masse von 25 bis 100 kg, vorzugsweise 40 bis 70 kg aufweist.

11. Elektrisches Zweirad, **dadurch gekennzeichnet, dass** es ein Batteriemodul (1) nach einem der Ansprüche 7 bis 10 aufweist.

12. Zweirad nach Anspruch 11, **dadurch gekennzeichnet, dass** es im Rahmen (11) eine Aufnahme für das Batteriemodul (1) aufweist, in die das Batteriemodul (1) von unten einsetzbar und befestigbar ist.

13. Zweirad nach Anspruch 12, **dadurch gekennzeichnet, dass** das Batteriemodul (1) im montierten Zustand den Rahmen (11) verstärkt.

14. Zweirad nach einem der Ansprüche 11 bis 13, **dadurch gekennzeichnet, dass** es ein Kommunikationsmodul (12) aufweist, das zur Kommunikation mit dem Energiemanagementsystem (5) über die Kommunikationsschnittstelle (6) ausgebildet ist und eine Benutzerschnittstelle aufweist, die zur Erfassung von Randbedingungen ausgebildet ist.
